(19) **Europäisches Patentamt / European Patent Office / Office européen des brevets**

(11) **EP 4 769 954 A1**

(12) # EUROPEAN PATENT APPLICATION

(43) Date of publication:
**01.07.2026 Bulletin 2026/27**

(21) Application number: **25227716.5**

(22) Date of filing: **30.12.2025**

(51) International Patent Classification (IPC):
**H04B 1/04** (2006.01)    **H04B 1/18** (2006.01)

(52) Cooperative Patent Classification (CPC):
**H04B 1/0458; H04B 1/18**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.12.2024  CN 202411998763**

(71) Applicant: **GUANGDONG OPPO MOBILE TELECOMMUNICATIONS CORP., LTD.**
**Dongguan, Guangdong 523860 (CN)**

(72) Inventors:
• CHEN, Feng
  Dongguan, Guangdong 523860 (CN)
• TONG, Lin
  Dongguan, Guangdong 523860 (CN)
• ZHANG, Ting
  Dongguan, Guangdong 523860 (CN)

(74) Representative: **Novagraaf Technologies**
**2 rue Sarah Bernhardt**
**CS90017**
**92665 Asnières-sur-Seine Cedex (FR)**

(54) **RADIO FREQUENCY SYSTEM AND COMMUNICATION DEVICE**

(57)    The present application relates to a radio frequency system and a communication device. The radio frequency system may include: a transceiver circuit (10); a receiving circuit (20); a first coupling circuit (30), configured to support coupling of a transmit signal on a transceiver path and coupling of a reflected signal of the transmit signal, and output a first forward coupled signal and a first backward coupled signal; a second coupling circuit (40), configured to selectively turn on the receiving path and the coupling path, support coupling of the first forward coupled signal and coupling of the reflected signal, and output a second forward coupled signal and a second backward coupled signal; and, a processing circuit (50), configured to determine second impedance information of the receiving path according to the second forward coupled signal and the second backward coupled signal.

Fig. 1

EP 4 769 954 A1

## Description

## TECHNICAL FIELD

The present disclosure relates to the field of communication technologies, and in particular, to a radio frequency system and a communication device.

## BACKGROUND

With the development of communication technologies, more and more communication devices have been applied in people's daily lives. The communication devices may include, for example, cell phones, smart watches, tablet computers, or the like.

A communication device may usually be provided with an antenna to support transmission and reception of radio frequency signals, so as to realize a communication function. In the process of transmitting and receiving radio frequency signals, impedance matching for a transmission path and a reception path where the antenna is located may usually be required to ensure communication quality.

Impedance tuning generally needs to perform impedance detection. However, existing communication devices have a problem that antenna impedance cannot be detected. Therefore, impedance tuning for realizing matching cannot be performed, which affects communication quality.

## SUMMARY

The present disclosure provides a radio frequency system and a communication device, which may realize impedance detection of a reception path in a non-transmission state, thereby enabling impedance tuning of the reception path in the non-transmission state.

According to a first aspect of the embodiments of the present disclosure, a radio frequency system may be provided. The radio frequency system may include: a transceiver circuit, a receiving circuit, a first coupling circuit, a second coupling circuit and a processing circuit. The transceiver circuit may be configured to be connected to a first antenna and support transmission and reception of a radio frequency signal. The receiving circuit may be configured to be connected to a second antenna and support reception of a radio frequency signal. The first coupling circuit may be arranged on a transceiver path between the transceiver circuit and the first antenna, configured to support coupling of a transmit signal of the transceiver path and to output a first forward coupled signal. The first coupling circuit may be further configured to support coupling of a reflected signal of the transmit signal, and to output a first backward coupled signal. The second coupling circuit may be arranged on a receiving path between the receiving circuit and the second antenna, and arranged on a coupling path between the first coupling circuit and the second antenna.

The second coupling circuit may be configured to selectively turn on the receiving path and the coupling path, support coupling of the first forward coupled signal to output a second forward coupled signal, and support coupling of a reflected signal of the first forward coupled signal to output a second backward coupled signa. The processing circuit may be connected to the first coupling circuit; and, configured to determine, based on the first forward coupled signal and the first backward coupled signal, first impedance information of the transceiver path. The processing circuit may be connected to the second coupling circuit; and, configured to determining, based on the second forward coupled signal and the second backward coupled signal, second impedance information of the receiving path.

According to a second aspect of the present disclosure, a communication device may be provided. The communication device may include the aforementioned radio frequency system.

The aforementioned radio frequency system and communication device may include the transceiver circuit, the receiving circuit, the first coupling circuit, the second coupling circuit, and the processing circuit. The transceiver circuit may support the transmission and reception of the radio frequency signal. The receiving circuit may support the reception of the radio frequency signal. Therefore, transmission and multi-channel reception of the radio frequency signals may be achieved, which is beneficial for enhancing communication performance. The first coupling circuit may be arranged on the transceiver path between the transceiver circuit and the first antenna, and may support coupling of the transmit signal of the transceiver path and the reflected signal of the transmit signal, and output the first forward coupled signal and the first backward coupled signal. Therefore, the processing circuit may determine the first impedance information of the transceiver path based on the first forward coupled signal and the first backward coupled signal, thereby achieving impedance detection of the transceiver path and further enabling impedance tuning of the transceiver path. The second coupling circuit may be arranged on the receiving path between the receiving circuit and the second antenna, and on the coupling path between the first coupling circuit and the second antenna. The second coupling circuit may selectively turn on the receiving path and the coupling path, support coupling of the first forward coupled signal and coupling of the reflected signal of the first forward coupled signal, and output the second forward coupled signal and the second backward coupled signal. Therefore, the processing circuit may determine the second impedance information of the receiving path based on the second forward coupled signal and the second backward coupled signal, thereby achieving impedance detection of the receiving path in a non-transmission state, enabling impedance tuning of the receiving path in the non-transmission state, and further achieving impedance detection and tuning of the transmission path and multiple receiving paths, thereby solving the problem of impedance mismatch caused by the inability to perform impedance detection on the receiving path in the non-transmission state.

Furthermore, in the radio frequency system provided by the embodiments of the present disclosure, a portion of the first forward coupled signal from the transceiver path in the transmission state may be transmitted to the second antenna on the receiving path in the non-transmission state via the second coupling circuit. By utilizing the second backward coupled signal and the second forward coupled signal obtained by coupling the first forward coupled signal, the technical problem that the receiving path cannot perform impedance detection due to being in the non-transmission state may be solved. In other words, the forward coupled signal from the transmission path may be delivered to the antenna of the non-transmission path for front-end mismatch measurement, decoupling the problem that impedance detection and tuning must be bound to the transmission path. This achieves the impedance detection of the receiving path in the non-transmission state, thereby enabling impedance tuning of the receiving path, solving the problem of antenna performance degradation caused by impedance mismatch in cases such as the receiving antenna being held by a hand, and facilitating enhancement of the communication performance of the communication device.

**BRIEF DESCRIPTION OF THE DRAWINGS**

To more clearly illustrate the technical solutions in the embodiments of the present disclosure or the related art, the accompanying drawings required for describing the embodiments or the related art will be briefly introduced below. Obviously, the accompanying drawings in the following description are merely some embodiments of the present disclosure. For those of ordinary skill in the art, other accompanying drawings may also be obtained based on these drawings without creative efforts.

Fig. 1 is a structural schematic diagram of a radio frequency system according to a first embodiment.
Fig. 2 is a structural schematic diagram of a radio frequency system according to a second embodiment.
Fig. 3 is a structural schematic diagram of a radio frequency system according to a third embodiment.
Fig. 4 is a structural schematic diagram of a radio frequency system according to a fourth embodiment.
Fig. 5 is a structural schematic diagram of a radio frequency system according to a fifth embodiment.
Fig. 6 is a structural schematic diagram of a radio frequency system according to a sixth embodiment.
Fig. 7 is a structural schematic diagram of a radio frequency system according to a seventh embodiment.
Fig. 8 is a structural schematic diagram of a radio frequency system according to an eighth embodiment.
Fig. 9 is a structural schematic diagram of a radio frequency system according to a ninth embodiment.
Fig. 10 is a structural schematic diagram of a radio frequency system according to a tenth embodiment.
Fig. 11 is a structural schematic diagram of a radio frequency system according to an eleventh embodiment.
Fig. 12 is a structural schematic diagram of a radio frequency system according to a twelfth embodiment.
Fig. 13 is a structural schematic diagram of a communication device according to an embodiment.
Fig. 14 is a structural schematic diagram of a communication device according to another embodiment.

**DETAILED DESCRIPTION**

To facilitate understanding of the present disclosure, the present disclosure will be described more comprehensively below with reference to the relevant accompanying drawings. Embodiments of the present disclosure are illustrated in the accompanying drawings. However, the present disclosure may be implemented in many different forms and is not limited to the embodiments described herein. On the contrary, the purpose of providing these embodiments is to make the content of the present disclosure more thorough and comprehensive.

Unless otherwise defined, all technical and scientific terms used herein may have the same meaning as commonly understood by those skilled in the art to which the present disclosure belongs. The terms used herein in the specification of the present disclosure may be only for the purpose of describing specific embodiments and are not intended to limit the present disclosure.

The terms "first", "second", or the like used in the present disclosure may be used herein to describe various elements, but these elements are not limited by these terms. These terms are only used to distinguish one element from another. For example, without departing from the scope of the present disclosure, a first coupling circuit may be referred to as a second coupling circuit. Similarly, a second coupling circuit may be referred to as a first coupling circuit. Both the first coupling circuit and the second coupling circuit are coupling circuits, but they are not the same coupling circuit.

The term "connection" in the following embodiments shall be understood as "electrical connection", "communication connection", or the like, if the connected circuits, modules, units, or the like have transmission of electrical signals or data between them.

The term "at least one" may refer to one or more, and "a plurality of" may refer to two or more. "At least part of an element" may refers to part or all of the element.

As used herein, the singular forms "a", "an" and "the" may also include the plural forms unless the context clearly indicates otherwise. The terms "comprises/comprising", "having" or the like may specify the existence of the stated features, integers, steps, operations, components, parts or combinations thereof, but do not exclude possibility of the existence or addition of one or more other features, integers, steps, operations, components, parts or combinations thereof. Meanwhile, the term "and/or" used in the present specification may include any and all combinations of the relevant listed items.

The radio frequency system involved in the embodiments of the present disclosure may be applied to communication devices with wireless communication functions. The communication devices may be handheld devices, vehicle-mounted devices, wearable devices, computing devices, or other processing devices connected to wireless modems, as well as various forms of user equipment (UE) (for example, cell phones), mobile stations (MS), or the like.

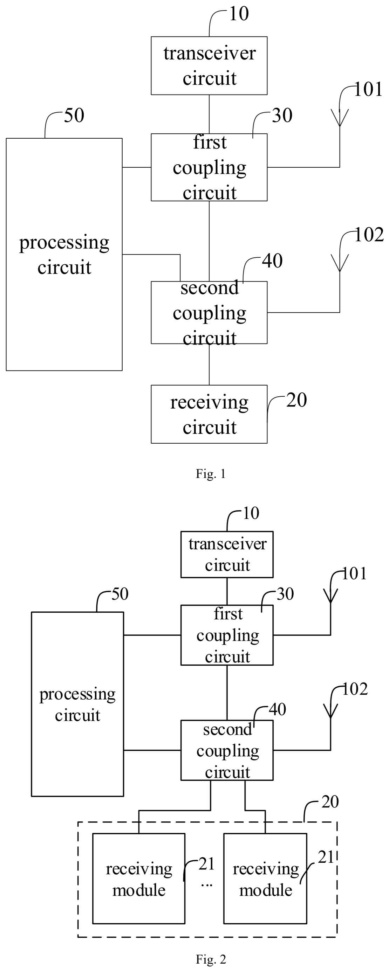

In some embodiments, as illustrated in Fig. 1, a radio frequency system may be provided. The radio frequency system may include a transceiver circuit 10, a receiving circuit 20, a first coupling circuit 30, a second coupling circuit 40, and a processing circuit 50.

The transceiver circuit 10 may be configured to be connected to a first antenna 101, and may support transmission and reception of radio frequency signals. The first antenna 101 may be configured to support transmission and reception of the radio frequency signals. The first antenna 101 may transmit the radio frequency signals or receive the radio frequency signals. The transceiver circuit 10 may transmit the radio frequency signals to the first antenna 101 for emission or transmission through the first antenna 101. The transceiver circuit 10 may also receive the radio frequency signals received by the first antenna 101.

The receiving circuit 20 may be configured to be connected to a second antenna 102, and may support reception of radio frequency signals. The second antenna 102 may support reception of radio frequency signals or transmission of radio frequency signals. The receiving circuit 20 may receive the radio frequency signals received by the second antenna 102. For example, the receiving circuit 20 may include at least one receiving module 21. As illustrated in Fig. 2, the number of the receiving modules 21 may be one or more. The receiving module 21 may be configured to be connected to the second antenna 102, and may support reception of the radio frequency signals. In a case where the receiving circuit 20 includes a plurality of receiving modules 21, different receiving modules 21 may be connected to different second antennas 102. In this way, the transceiver circuit 10 and the at least one receiving module 21 may support transmission of radio frequency signals and multi-channel reception, thereby enhancing communication performance of a communication device.

The first coupling circuit 30 may be arranged on a transceiver path between the transceiver circuit 10 and the first antenna 101. The first coupling circuit 30 may be connected to the receiving circuit 20, and may be connected to the first antenna 101. The first coupling circuit 30 may be configured to support coupling of the transmit signal on the transceiver path and the reflected signal of the transmit signal, and output a first forward coupled signal and a first backward coupled signal. The first coupling circuit 30 may couple the transmit signal on the transceiver path and output the first forward coupled signal, and may couple the reflected signal of the transmit signal and output the first backward coupled signal. The reflected signal of the transmit signal may be understood as a signal generated at a position of the first coupling circuit 30 in a case where the transmit signal is reflected back due to mismatch at an antenna end. The first coupling circuit 30 may include a bidirectional coupler. The first forward coupled signal and the first backward coupled signal may be used to detect first impedance information of the transceiver path. The first impedance information may be understood as impedance information at the position of the first coupling circuit 30 on the transceiver path.

The second coupling circuit 40 may be arranged on a receiving path between the receiving circuit 20 and the second antenna 102, and on a coupling path between the first coupling circuit 30 and the second antenna 102. The second coupling circuit 40 may be connected to the receiving circuit 20, the first coupling circuit 30, and the second antenna 102 separately. The second coupling circuit 40 may be configured to selectively turn on the receiving path and the coupling path, support coupling of the first forward coupled signal and the reflected signal of the first forward coupled signal, and output a second forward coupled signal and a second backward coupled signal. In a case where the coupling path is turned on, the second coupling circuit 40 may transmit at least part of the first forward coupled signal to the second antenna 102, couple the first forward coupled signal and output the second forward coupled signal. In a case where the receiving path is turned on, the second coupling circuit 40 may couple the reflected signal of the first forward coupled signal, and output the second backward coupled signal. The reflected signal of the first forward coupled signal may be understood as, in a case where the first forward coupled signal is reflected back due to mismatch at the antenna end, the signal generated at a position of the second coupling circuit 40. The second forward coupled signal and the second backward coupled signal may be used to detect second impedance information of the receiving path. The second impedance information may be understood as impedance information at the position of the second coupling circuit 40 on the receiving path.

The processing circuit 50 may connected with the first coupling circuit 30 and the second coupling circuit 40 separately. The processing circuit 50 may be configured to determine, according to the first forward coupled signal and the first backward coupled signal, the first impedance information of the transceiver path. The processing circuit 50 may be configured to determine, according to the second forward coupled signal and the second backward coupled signal, the second impedance information of the receiving path. The first impedance information may be used for impedance tuning of the transceiver path to achieve impedance matching at the antenna end. The second impedance information may be used for impedance tuning of the receiving path to achieve impedance matching at the antenna end. The processing circuit 50 may also be configured to control a turn-on state of the second coupling circuit 40, to enable the second coupling circuit 40 to selectively turn on the receiving path and the coupling path.

The processing circuit 50 may determine first forward power and first phase information according to the first forward coupled signal; determine first reverse power and second phase information according to the first backward coupled signal; determine a first voltage standing wave ratio (VSWR) of the transceiver path according to the first forward power and the first reverse power; and, determine the first impedance information of the transceiver path according to the first VSWR, the first phase information, and the second phase information. The first forward power may be understood as transmit signal power. The first reverse power may be understood as reflected signal power of the transmit signal, that is the reflected signal power coupled out at the position of the first coupling circuit 30 in a case where the transmit signal power is reflected back due to mismatch at the antenna end. The processing circuit 50 may also determine second forward power and third phase information according to the second forward coupled signal; determine second reverse power and fourth phase information according to a second backward coupled signal; determine a second VSWR of the receiving path according to the second forward power and the second reverse power; and, determine the second impedance information of the receiving path according to the second VSWR, the third phase information, and the fourth phase information. The second forward power may be understood as first forward coupled signal power. The second reverse power may be understood as reflected signal power of the first forward coupled signal, that is the reflected signal power coupled out at the position of the second coupling circuit 40 in a case where the first forward coupled signal power is reflected back due to mismatch at the antenna end.

The operation of determining a voltage standing wave ratio (VSWR) according to forward power and reverse power may include: determining magnitude of a power reflection coefficient at the position of a target coupling circuit according to the forward power and the reverse power, and determining the VSWR according to the magnitude of the power reflection coefficient. This operation may be expressed by the formulas as follows:

$$|\gamma|=P(\text{reverse})/P(\text{forward}) \qquad (1)$$

$$VSWR=(1+|\gamma|)/(1-\gamma|) \qquad (2)$$

$|\gamma|$ may represent the power reflection coefficient magnitude. P(reverse) may represent the reverse power. P(forward) may represent the forward power. VSWR may represent the voltage standing wave ratio.

The processing circuit 50 may determine a first power reflection coefficient magnitude at the position of the first coupling circuit 30 on the transceiver path according to the first forward power and the first reverse power; and determine the first VSWR of the transceiver path according to the first power reflection coefficient magnitude, thereby determining the first impedance information of the transceiver path according to the first VSWR, the first phase information and the second phase information. The processing circuit 50 may determine a second power reflection coefficient magnitude at the position of the second coupling circuit 40 on the receiving path according to the second forward power and the second reverse power; and determine the second VSWR of the receiving path according to the second power reflection coefficient magnitude, thereby determining the second impedance information of the receiving path according to the second VSWR, the third phase information and the fourth phase information.

The processing circuit 50 may also perform signal amplification, down-conversion, and analog-to-digital convert (ADC) processing on each coupled signal, so as to determine power and phase information for the processed coupled signals. The coupled signals may include the first forward coupled signal, the first backward coupled signal, the second forward coupled signal, and the second backward coupled signal.

A radio frequency system provided in the embodiments of the present disclosure may include the transceiver circuit 10, the receiving circuit 20, the first coupling circuit 30, the second coupling circuit 40, and the processing circuit 50. The transceiver circuit 10 may support transmission and reception of the radio frequency signals. The receiving circuit 20 may support reception of radio frequency signals, thereby enabling transmission and multi-channel reception of the radio frequency signals, which is beneficial to enhance the communication performance. The first coupling circuit 30 may be arranged on the transceiver path between the transceiver circuit 10 and the first antenna 101, and may support coupling of the transmit signal on the transceiver path and coupling of the reflected signal of the transmit signal, and output the first forward coupled signal and the first backward coupled signal. In this way, the processing circuit 50 may determine the first impedance information of the transceiver path according to the first forward coupled signal and the first backward coupled signal, realizing impedance detection of the transceiver path and further enabling the impedance tuning of the transceiver path. The second coupling circuit 40 may be arranged on the receiving path between the receiving circuit 20 and the second antenna 102, and on the coupling path between the first coupling circuit 30 and the second antenna 102. The second coupling circuit 40 may selectively turn on the receiving path and the coupling path, support coupling of the first forward coupled signal and coupling of the reflected signal of the first forward coupled signal, and output the second forward coupled signal and the second backward coupled signal. Therefore, the processing circuit 50 may determine the second impedance information of the receiving path according to the second forward coupled signal and the second backward coupled signal, realizing the impedance detection of the receiving path in a non-transmission state, thereby enabling the impedance tuning of the receiving path in the non-transmission state. Further, impedance detection and tuning of the transmit path and multiple receiving paths may be achieved, thereby solving the problem of impedance mismatch caused by inability to perform impedance detection on the receiving path in the non-transmission state.

In a case where the antenna is held by hand or affected by surrounding environment, mismatch may occur. A large mismatch may seriously affect a total radiated power (TRP) and total isotropic sensitivity (TIS) performance of the antenna, thereby affecting the communication performance. In the operation of traditional solutions, an antenna in the same radio frequency path as both the coupler and the impedance tuner may need to be in an operating state. Otherwise, detection of power-related information cannot be completed, making it impossible to calculate the impedance mismatch at the antenna end and further unable to achieve impedance tuning. In response, the radio frequency system provided in the embodiments of the present disclosure may transmit a part of the first forward coupled signal from the transceiver path in the transmission state to the second antenna 102 on the receiving path in the non-transmission state through the second coupling circuit 40, and realize the impedance detection of the receiving path by using the second backward coupled signal and the second forward coupled signal obtained by coupling the first forward coupled signal. In this way, the technical problem that the receiving path cannot perform the impedance detection due to being in the non-transmission state may be solved. That is, the forward coupled signal of the transmit path may be transmitted to the antenna of the non-transmit path for front-end mismatch measurement, decoupling the problem that impedance detection and tuning must be bound to the transmit path. Thus, the impedance detection of the receiving path may be realized, further enabling the impedance tuning of the receiving path, solving the problem of antenna performance degradation caused by the impedance mismatch when the receiving antenna is held by hand, and helping to enhance the communication performance of the communication device.

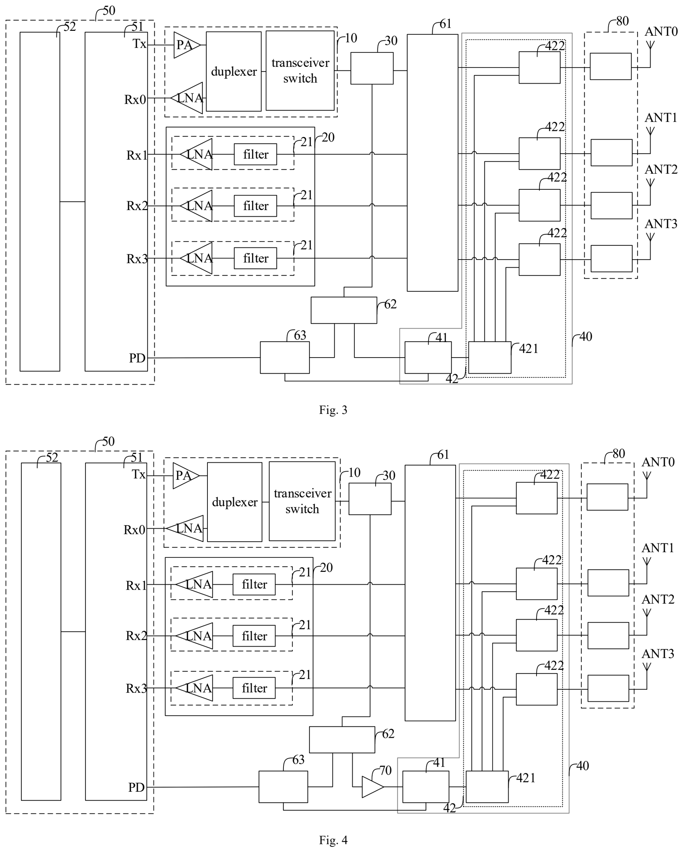

In some embodiments, as illustrated in Fig. 3 to Fig. 6, the radio frequency system may further include a first switch circuit 61. The first switch circuit 61 may be connected to the first coupling circuit 30, the receiving circuit 20, and the second coupling circuit 40 separately. The first switch circuit 61 may be configured to selectively turn on: the path between the first coupling circuit 30 and the second coupling circuit 40; and, the path between the receiving circuit 20 and the second coupling circuit 40. The first switch circuit 61 may be connected to the first coupling circuit 30, the receiving circuit 20, and the second coupling circuit 40 separately. The first switch circuit 61 may include an n Pole n Throw (nPnT) switch.

The specific type of the first switch circuit 61 may be determined according to specific structure and connection mode of the radio frequency system, and is not limited herein. For example, taking the receiving circuit 20 including three receiving modules 21 as an example, the first switch circuit 61 may include a 4P4T switch. Four first ends of the 4P4T switch may be connected to the first coupling circuit 30 and the three receiving modules 21 respectively, and four second ends of the 4P4T switch may be connected to the second coupling circuit 40 respectively.

The second coupling circuit 40 may be arranged on the paths between the first switch circuit 61 and various antennas, and arranged on the paths between the first coupling circuit 30 and the various antennas. The various antennas may include the first antenna 101 and the second antenna 102. The second coupling circuit 40 may be configured to selectively turn on the paths between the first switch circuit 61 and the various antennas respectively, and selectively turn on the paths between the first coupling circuit 30 and the various antennas respectively, support the coupling of the first forward coupled signal and the coupling of the reflected signal of the first forward coupled signal, and output the second forward coupled signal and the second backward coupled signal.

The processing circuit 50 may also be connected to the first switch circuit 61, and configured to control the turn-on state of the first switch circuit 61. In a case where the first switch circuit 61 and the second coupling circuit 40 turn on the transceiver path, the radio frequency system may support the transmission and reception of the radio frequency signals. In a case where the first switch circuit 61 and the second coupling circuit 40 turn on the receiving path, the radio frequency system may support reception of the radio frequency signals. In application, the processing circuit 50 may control the turn-on state of the first switch circuit 61 and the turn-on state of the second coupling circuit 40 separately, so that both the transceiver path and the receiving path are in a turn-on state to support transmission and multi-channel reception of the radio frequency signals.

Each of the first switch circuit 61 and the second coupling circuit 40 may be arranged on the transceiver path between the transceiver circuit 10 and the various antennas, and each of the first switch circuit 61 and the second coupling circuit 40 may be arranged on the receiving paths between the receiving circuit 20 and the various antennas. Therefore, the processing circuit 50 may control the turn-on states of the first switch circuit 61 and the second coupling circuit 40 separately, so as to support an antenna switching function. Each of the first antenna 101 and the second antenna 102 may be configured to support the transmission or reception of the radio frequency signals. In application, according to actual scenarios, one antenna may be selected from the various antennas as the first antenna 101 for transmission and reception of the radio frequency signals, and the remaining antennas may serve as the second antenna 102 for receiving the radio frequency signals, which is not specifically limited herein.

The radio frequency system provided in the embodiments of the present disclosure may be further provided with the first switch circuit 61. The first switch circuit 61 may selectively turn on the path between the first coupling circuit 30 and the second coupling circuit 40, and selectively turn on the path between the receiving circuit 20 and the second coupling circuit 40. The second coupling circuit 40 may be arranged on the paths between the first switch circuit 61 and the various antennas, and arranged on the paths between the first coupling circuit 30 and the various antennas. By switching the turn-on state of the first switch circuit 61, the antenna switching function may be realized, thereby facilitating the enhancement of the communication performance of the communication device.

Taking a scenario where the radio frequency system is connected to four antennas as an example, in the related art, if antenna switching is supported, all four antennas may act as transmit antennas. In a case where one of the four antennas is in the transmission state, the other three antennas serve as receiving antennas, making these three antennas impossible to perform the impedance detection and further unable to achieve the impedance tuning. In a case where transmit antenna switching is not supported, only one antenna may support transmission, and the other three receiving antennas may also cannot realize the impedance detection and tuning. However, mismatch of receiving antennas may lead to imbalance between receiving antennas, resulting in reduced signal-to-noise ratio (SNR) and decreased modulation and coding scheme (MCS) during medium and/or strong field communication, thereby affecting throughput. In weak fields, due to mismatch of receiving antennas, diversity effect may be weakened, leading to stuttering. In response, the radio frequency system provided in the embodiments of the present disclosure may not only support the antenna switching, but may also enable the impedance detection of the receiving path in the non-transmission state, thereby realizing the impedance tuning of the receiving path in the non-transmission state. The radio frequency system may detect and tune the mismatch of each antenna, thereby enhancing the antenna performance and further enhancing the communication performance.

In some embodiments, as illustrated in Fig. 3 to Fig. 6, the second coupling circuit 40 may include a first coupling module 41 and a first switch module 42. The first switch module 42 may be arranged on the paths between the first switch circuit 61 and various antennas, and arranged on the paths between the first coupling module 41 and the various antennas. The first switch module 42 may be connected to the first switch circuit 61, the first coupling module 41, and the various antennas separately. The first switch module 42 may be configured to selectively turn on the paths between the first switch circuit 61 and the various antennas, and selectively turn on the paths between the first coupling module 41 and the various antennas. The first switch module 42 may include an nPnT switch or a plurality of single pole n throw (SPnT) switches. The type of the first switch module 42 may be set according to actual scenarios, which is not limited herein.

For example, taking the receiving circuit 20 including three receiving modules 21 and the first switch circuit 61 including a 4P4T switch as an example, the first switch module 42 may include a 5P4T switch. The four first ends of the 4P4T switch may be connected to the first coupling circuit 30 and the three receiving modules 21 in a one-to-one correspondence respectively. Five first ends of the 5P4T switch may be connected to the four second ends of the 4P4T switch and the first coupling module 41 in a one-to-one correspondence respectively. Four second ends of the 5P4T switch may be connected to the first antenna 101 and the three second antennas 102 in a one-to-one correspondence respectively. The above is only an exemplary description, and the first switch module 42 may also be a plurality of SPnT switches. A suitable structure may be selected according to actual scenarios, which is not limited herein.

The first coupling module 41 may be connected to the first coupling circuit 30. The first coupling module 41 may be configured to support coupling of the first forward coupled signal and coupling of the reflected signal of the first forward coupled signal, and output the second forward coupled signal and the second backward coupled signal. In a case where the coupling path is in the turn-on state, the first coupling module 41 may transmit at least part of the first forward coupled signal to the second antenna 102, couple the first forward coupled signal and output the second forward coupled signal, and couple the reflected signal of the first forward coupled signal and output the second backward coupled signal. The first coupling module 41 may include the bidirectional coupler. The receiving path may support reception of radio frequency signals when in the turn-on state.

In the embodiments of the present disclosure, the second coupling circuit 40 may include the first coupling module 41 and the first switch module 42. The first switch module 42 may selectively turn on the paths between the first switch circuit 61 and the various antennas, and selectively turn on the paths between the first coupling module 41 and the various antennas. The first coupling module 41 may support the coupling of the first forward coupled signal and the coupling of the reflected signal of the first forward coupled signal, and output the second forward coupled signal and the second backward coupled signal. Therefore, through the first coupling module 41 and the first switch module 42, at least part of the first forward coupled signal output by the first coupling circuit 30 may be transmitted to the second antenna 102 on the receiving path. The first coupling module 41 may couple the at least part of the first forward coupled signal, and output the second forward coupled signal and the second backward coupled signal, thereby realizing the impedance detection of the receiving path. This may solve the technical problem that the receiving path cannot perform the impedance detection due to not being in the transmission state, further solve the antenna mismatch problem, enhancing the antenna performance, and help to enhance the communication performance of the communication device.

In some embodiments, as illustrated in Fig. 3 to Fig. 6, the processing circuit 50 may be further connected to the first switch module 42. The processing circuit 50 may be further configured to control the turn-on state of the first switch module 42 to turn on the coupling path during a transmit time slot. The transmit time slot may refer to a time slot during which the radio frequency system transmits radio frequency signals through the transceiver path. The processing circuit 50 may also control the turn-on state of the first switch module 42 to turn on the coupling path and the receiving path in the time-division manner. The receiving path may support reception of the radio frequency signals when in the turn-on state.

During the transmit time slot and in a case where the coupling path is in the turn-on state, the first coupling module 41 may transmit at least part of the first forward coupled signal to the second antenna 102, couple the first forward coupled signal and output the second forward coupled signal, and couple the reflected signal of the first forward coupled signal and output the second backward coupled signal.

To realize the impedance detection, the radio frequency path may need to be in the transmission state. The embodiments of the present disclosure may use the first forward coupled signal matching the transceiver path to realize the impedance detection of the receiving path. Therefore, it is necessary to detect the impedance of the receiving path during the transmit time slot of the transceiver path. In addition, the embodiments of the present disclosure may turn on the coupling path and the receiving path in the time-division manner, thereby detecting the impedance mismatch at the antenna end matching the receiving path in a case where the coupling path is in the turn-on state, and supporting reception of radio frequency signals in a case where the receiving path is in the turn-on state. This avoids signal conflicts without additional circuit structures, which is conducive to improving system integration and reducing costs.

In some embodiments, as illustrated in Fig. 3 to Fig. 6, the receiving circuit 20 may include at least two receiving modules 21. In this case, the radio frequency system in the embodiments of the present disclosure may include at least two antennas, at least two receiving paths, and at least two coupling paths. The receiving module 21 may be configured to be connected to the second antenna 102 and support reception of radio frequency signals. Different receiving modules 21 may be connected to different second antennas 102. Moreover, the receiving paths and coupling paths matching with different second antennas 102 may be different.

The processing circuit 50 may be further configured to control the turn-on state of the first switch module 42, so as to turn on the coupling paths where the various second antennas 102 are located in the time-division manner during at least one transmit time slot. The processing circuit 50 may control the turn-on state of the first switch module 42 to turn on the coupling paths where the various second antenna 102 are located in the time-division manner during one or more transmit time slots, thereby completing the impedance detection of the various receiving paths in the time-division manner during the transmit time slot. The turn-on states of different coupling paths may be in different time periods of a same transmit time slot or in different transmit time slots, which is not limited herein. The processing circuit 50 may also control the turn-on state of the first switch module 42 to turn on the coupling path and the receiving path matching with the same second antenna 102 in the time-division manner. The receiving path may support the transmission and reception of the radio frequency signals when in the turn-on state.

The first coupling module 41 may be further configured to, in a case where the target coupling path among the coupling paths is in the turn-on state during the transmit time slot, support coupling of the first forward coupled signal and support coupling of the reflected signal of the first forward coupled signal, and output the second forward coupled signal and the second backward coupled signal of the target receiving path. The second impedance information may be the impedance information of a target receiving path. During the transmit time slot and in a case where the target coupling path is in the turn-on state, the first coupling module 41 may transmit at least part of the first forward coupled signal to the second antenna 102 matching with the target coupling path, couple the first forward coupled signal and output the second forward coupled signal of the target receiving path, and couple a reflected signal of a target first forward coupled signal and output the second backward coupled signal of the target receiving path.

In the embodiments of the present disclosure, the various coupling paths (or the various second antennas 102) may share the first coupling module 41, realizing multiplexing of the first coupling module 41, which may help enhance system integration and reduce costs. In addition, the processing circuit 50 may control the first switch module 42 to turn on the various coupling paths in the time-division manner, realizing the time-division impedance detection of multiple receiving paths. This may avoid signal conflicts during impedance detection of multiple receiving paths by reusing the first coupling module 41, increasing an accuracy of impedance detection, and may further enhance the communication performance of the communication device.

In some embodiments, as illustrated in Fig. 3 to Fig. 6, the receiving circuit 20 may include at least two receiving modules 21. The receiving module 21 may be configured to connect to the second antenna 102 and support reception of the radio frequency signals. Different receiving modules 21 may be connected to different second antennas 102. For specific details, refer to the relevant descriptions above, which will not be repeated herein.

The first switch module 42 may include a first switch unit 421 and at least two second switch units 422.

The first switch unit 421 may be connected to the first coupling module 41 and the various second switch units 422 separately. The first switch unit 421 may be configured to selectively turn on the paths between the first coupling module 41 and the various second switch units 422. The first switch unit 421 may include a Single Pole n Throw (SPnT) switch.

The second switch unit 422 may be arranged on the paths between the first switch circuit 61 and a matched one of the antennas, and on the paths between the first switch unit 421 and a matched one of the antennas. Different second switch units 422 may match with different antennas. The second switch unit 422 may be connected to the first switch circuit 61, connected to the first switch unit 421, and connected to a matched one of the various antennas. Different second switch units 422 may be connected to different antennas. The second switch unit 422 may be configured to selectively turn on the path between the first switch circuit 61 and a matched one of the various antennas, selectively turn on the path between the first switch unit 421 and a matched one of the various antennas. A receiving path where the first switch circuit 61 is located may share one antenna with a coupling path where the first switch unit 421 is located. The second switch unit 422 may selectively turn on the receiving path and the coupling path where the second switch unit 422 is located. The second switch unit 422 may include the SPnT switch.

The specific types of the first switch unit 421 and the second switch unit 422 may be determined according to factors such as the specific structure and connection mode of the radio frequency system, and are not limited herein. For example, taking the receiving circuit 20 including three receiving modules 21 and the first switch circuit 61 including a 4 pole 4 throw (4P4T) switch as an example, the first switch unit 421 may include a single pole 4 throw (SP4T) switch, and the four second switch units 422 may each include a Single Pole 2 Throw (SP2T) switch. The four first ends of the 4P4T switch may be connected to the first coupling circuit 30 and the three receiving modules 21 in a one-to-one correspondence separately. The four second ends of the 4P4T switch may be respectively connected to one of the first ends of each of the four SP2T switches. The first end of the SP4T switch may be connected to the first coupling module 41. The four second ends of the SP4T switch may be connected to another of the first ends of each of the four SP2T switches. The second ends of the four SP2T switches may be connected to the first antenna 101 and the three second antennas 102 in a one-to-one correspondence.

The processing circuit 50 may also be connected to the first switch unit 421 and the various second switch units 422 separately. The processing circuit 50 may further control the turn-on states of the first switch unit 421 and the various second switch unit 422, so as to, during the transmit time slot, turn on the coupling path where each of the various second antennas 102 is located in the time-division manner, thereby realizing the time-division impedance detection of multiple receiving paths, improving the impedance detection accuracy, and enhancing the system integration. The processing circuit 50 may also control the turn-on states of the first switch unit 421 and each of the various second switch unit 422 separately, to turn on the coupling path and the receiving path where the same second antenna 102 is located in the time-division manner, thereby supporting the impedance detection of the receiving path and the reception of the radio frequency signals.

In the radio frequency system provided in the embodiments of the present disclosure, the first switch module 42 may include the first switch unit 421 and at least two second switch units 422. The first switch unit 421 may selectively turn on the path between the first coupling module 41 and a matched one of the various second switch units 422, enabling switching of the receiving path currently undergoing the impedance detection. In addition, the second switch unit 422 may selectively turn on the paths between the first switch circuit 61 and a matched one of the antennas, and the paths between the first switch unit 421 and a matched one of the antennas, thereby supporting system transmission and multi-channel reception while realizing the time-division impedance detection of the transceiver path and multiple receiving paths. This may avoid signal conflicts, enhance the system integration, help enhance the accuracy of impedance detection, thereby contributing to improving enhancing the accuracy of impedance tuning for impedance matching, and further helping to enhance the communication performance of the communication device.

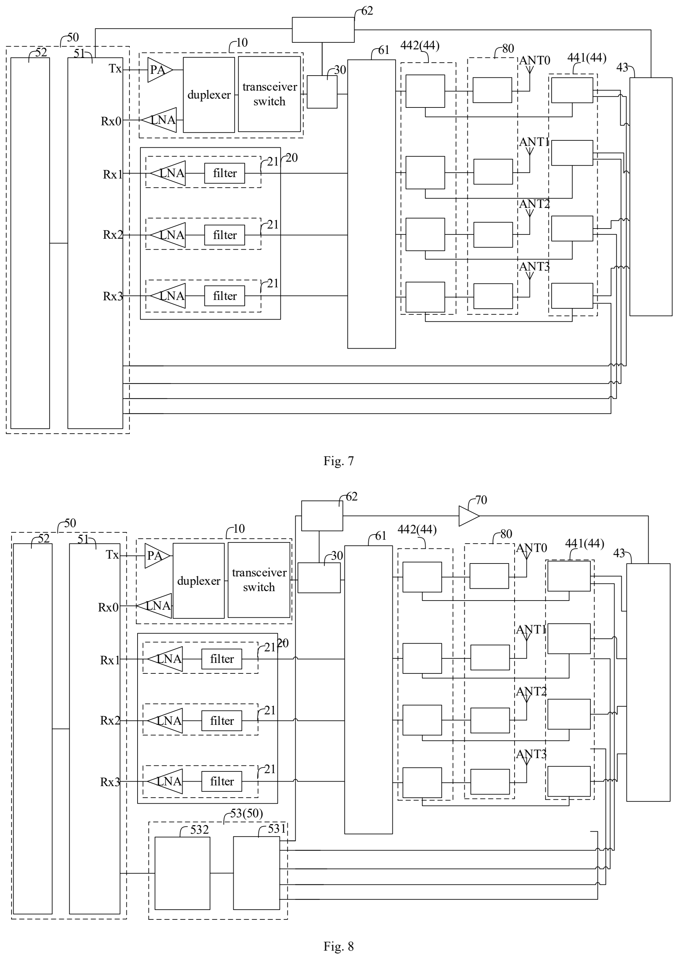

In some embodiments, as illustrated in Fig. 7 and Fig. 8, the receiving circuit 20 may include at least two receiving modules 21. The receiving module 21 may be configured to connect to the second antenna 102 and support reception of the radio frequency signals. Different receiving modules 21 may be connected to different second antennas 102. For specific details, refer to the relevant descriptions above, which will not be repeated herein.

Based on the above, the second coupling circuit 40 may include the power division module 43 and at least three second coupling modules 44.

The power division module 43 may be connected to the first coupling circuit 30. The power division module 43 may be configured to generate at least two first sub-forward coupled signals according to the first forward coupled signal. The number of first sub-forward coupled signals may be greater than or equal to the number of receiving modules 21. For example, the number of first sub-forward coupled signals may be equal to the number of receiving modules 21, or equal to the number of receiving modules 21 plus one. The specific number of first sub-forward coupled signals may be determined according to factors such as the specific structure and connection mode of the radio frequency system, and is not limited herein. The power division module 43 may equally divide the first forward coupled signal into at least two first sub-forward coupled signals. The power division module 43 may include a power divider.

The second coupling module 44 may be arranged on the path between the first switch circuit 61 and a matched one of the various antennas, and the path the power division module 43 and a matched one of the antennas. Different second coupling modules 44 may match with different antennas. The second coupling module 44 may be connected to the power division module 43, the first switch circuit 61, and a second antenna 102 separately. Different second coupling modules 44 may be connected to different antennas. The number of second coupling modules 44 may be greater than or equal to the number of receiving modules 21 plus one. For example, the number of second coupling modules 44 may be equal to the number of receiving modules 21 plus one. The specific number of second coupling modules 44 may be determined according to factors such as the specific structure and connection mode of the radio frequency system, and is not limited herein.

The second coupling module 44 may be configured to selectively turn on the path between the first switch circuit 61 and a matched antenna, and the path between the power division module 43 and a matched antenna, thereby supporting coupling of the first sub-forward coupled signal and coupling of a matched reflected signal of the first sub-forward coupled signal, and output the second forward coupled signal and the second backward coupled signal. In a case where the coupling path where the second coupling module 44 is located is turned on, the second coupling module 44 may transmit at least part of the first sub-forward coupled signal to the second antenna 102, couple the first sub-forward coupled signal and output the second forward coupled signal. In a case where the coupling path where the second coupling module 44 is located is turned on, the second coupling module 44 may couple the reflected signal of the first sub-forward coupled signal and output the second backward coupled signal.

The processing circuit 50 may also be connected to the various second coupling modules 44 separately. The processing circuit 50 may further control the turn-on states of the various second coupling modules 44 to realize impedance detection of the receiving paths. For the process of impedance detection of the receiving paths, refer to the relevant descriptions above, which will not be repeated herein.

In the radio frequency system provided in the embodiments of the present disclosure, the receiving circuit 20 may include at least two receiving modules 21. The second coupling circuit 40 may include the power division module 43 and at least three second coupling modules 44. The power division module 43 may generate at least two first sub-forward coupled signals according to the first forward coupled signal. The second coupling module 44 may selectively turn on the path between the receiving module 21 and the matched second antenna 102, and the path between the power division module 43 and the matched second antenna 102, thereby supporting coupling of the first sub-forward coupled signal and coupling of the reflected signal of the first sub-forward coupled signal, and output the second forward coupled signal and the second backward coupled signal. In this way, on the basis of supporting the multi-antenna switching, sharing of the first forward coupled signal by multiple receiving paths may be realized, and one-to-one coupling of the second coupling modules 44 to the receiving paths may be achieved. This may enable the processing circuit 50 to perform time-division or simultaneous impedance detection of the various receiving paths, enhance the impedance detection performance of the system, and may be applicable to various scenarios, and have higher flexibility.

In some embodiments, as illustrated in Fig. 7 and Fig. 8, the second coupling module 44 may include a coupling unit 441 and a third switch unit 442. The third switch unit 442 may be arranged on the path between the coupling unit 441 and a matched second antenna 102, and the path between the receiving module 21 matching with the coupling unit 441 and a matched second antenna 102. Different third switch units 442 may match with different receiving modules 21 and different second antennas 102. The third switch unit 442 may be connected to the coupling unit 441, the matched receiving module 21, and the second antenna 102 separately. Different third switch units 442 may be connected to different receiving modules 21 and different second antennas 102. The third switch unit 442 may be configured to selectively turn on the path between the matched receiving module 21 and the matched second antenna 102, and the path between the power division module 43 and the matched second antenna 102.

The coupling unit 441 may be connected to the power division module 43. The coupling unit 441 may be configured to support coupling of the first sub-forward coupled signal and coupling of the reflected signal of the first sub-forward coupled signal, and output the second forward coupled signal and the second backward coupled signal. In a case where the coupling path where the coupling unit 441 is located is in the turn-on state, the coupling unit 441 may transmit at least part of the first forward coupled signal to the second antenna 102, couple the first sub-forward coupled signal and output the second forward coupled signal. In a case where the receiving path where the coupling unit 441 is located is in the turn-on state, the coupling unit 441 may couple the reflected signal of the first sub-forward coupled signal and output the second backward coupled signal. For example, the first coupling module 41 may include a second bidirectional coupler. For example, the coupling unit 441 may include the bidirectional coupler.

The processing circuit 50 may also be connected to the third switch unit 442 of each second coupling module 44 separately. The processing circuit 50 may further control the turn-on state of each third switch unit 442 to realize the impedance detection of the matched receiving path.

In the embodiments of the present disclosure, the second coupling module 44 may include the coupling unit 441 and the third switch unit 442. The third switch unit 442 may selectively turn on the path between the matched receiving module 21 and the matched second antenna 102, and the path between the power division module 43 and the matched second antenna 102. The coupling unit 441 may support coupling of the first sub-forward coupled signal and coupling the reflected signal of the first sub-forward coupled signal, and output the second forward coupled signal and the second backward coupled signal. Thus, the on-off states of the various receiving paths and various coupling paths may be independently controlled by the various third switch units 442, and the first sub-forward coupled signal and the reflected signal of the first sub-forward coupled signal may be independently coupled by various coupling units 441. This may realize decoupling between impedance detections of each receiving path, so that the various receiving paths does not affect each other, thereby providing technical support for time-division or simultaneous impedance detection of each receiving path, enhancing the impedance detection performance of the system, being applicable to various scenarios, and having higher flexibility.

In some embodiments, as illustrated in Fig. 7 and Fig. 8, the processing circuit 50 may be further connected to each third switch unit 442 separately. The processing circuit 50 may be further configured to control the turn-on state of each third switch unit 442, to turn on the coupling path matching with at least one second antenna 102 in the time-division manner during the transmit time slot. The processing circuit 50 may control the turn-on state of each third switch unit 442 separately to turn on the coupling path matching with one second antenna 102 during the transmit time slot, or turn on the coupling paths matching with multiple second antennas 102 simultaneously during the transmit time slot. The processing circuit 50 may also turn on the coupling path and the receiving path matching with the same second antenna 102 in the time-division manner. The receiving path may support reception of the radio frequency signals while in the turn-on state.

The processing circuit 50 may be further configured to determine the second impedance information of the receiving path where the at least one coupling unit 441 is located according to the second forward coupled signal and the second backward coupled signal output by the at least one coupling unit 441.

The coupling unit 441 may be configured to, in a case where the coupling path matching with the coupling unit 441 is in the turn-on state during the transmit time slot, support coupling of the first sub-forward coupled signal and coupling of the reflected signal of the first sub-forward coupled signal, and output the second forward coupled signal and the second backward coupled signal. During the transmit time slot and in a case where the coupling path where the coupling unit 441 is located is in the turn-on state, the coupling unit 441 may transmit at least part of the first forward coupled signal to the second antenna 102, couple the first forward coupled signal and output the second forward coupled signal, and couple the reflected signal of the first forward coupled signal and output the second backward coupled signal. For example, the first coupling module 41 may include the second bidirectional coupler. For example, the coupling unit 441 may include the bidirectional coupler.

In the embodiments of the present disclosure, the processing circuit 50 may control the turn-on state of each third switch unit 442 separately, so as to turn on the coupling paths matching with at least one second antenna 102 in the time-division manner during the transmit time slot. The processing circuit 50 may turn on the coupling paths matching with one or more second antennas 102 simultaneously, thereby realizing time-division or simultaneous impedance detection of multiple receiving paths. This may achieve decoupling between the various receiving paths, improve the impedance detection efficiency, be applicable to various scenarios, and have higher flexibility.

In some embodiments, as illustrated in Fig. 4, Fig. 6, Fig. 8, Fig. 10, and Fig. 12, the radio frequency system further may include a low-noise amplification circuit 70. The low-noise amplification circuit 70 may be arranged on the path between the first coupling circuit 30 and the second coupling circuit 40, and may be configured to support low-noise amplification of the first forward coupled signal. For example, the low-noise amplification circuit 70 may include a low noise amplifier (LNA).

The second coupling circuit 40 may be configured to selectively turn on the receiving path and the coupling path, support coupling of the low-noise amplified first forward coupled signal and coupling of the reflected signal of the low-noise amplified first forward coupled signal, and output the second forward coupled signal and the second backward coupled signal.

The first forward coupled signal may be small. For example, in a case where the transmit power of the radio frequency signal is low, the first forward coupled signal output by the first coupling circuit 30 through coupling the radio frequency signal may also be small. In this regard, the embodiments of the present disclosure may arrange the low-noise amplification circuit 70 on the path between the first coupling circuit 30 and the second coupling circuit 40. The low-noise amplification circuit 70 may perform low-noise amplification on the first forward coupled signal before the second coupling circuit 40 performs forward coupling. The low-noise amplification process on the first forward coupled signal may help ensure that the power of the second forward coupled signal output by the second coupling circuit 40 is within a suitable power range, thereby making the impedance information of the receiving path more accurate.

In some embodiments, as illustrated in Fig. 3 to Fig. 12, the radio frequency system further may include two tuning circuits 80. The tuning circuit 80 may be an impedance tuner. The two tuning circuits 80 may be a first tuning circuit 81 and a second tuning circuit 82 respectively.

The first tuning circuit 81 may be arranged on the transceiver path between the transceiver circuit 10 and the first antenna 101. The first tuning circuit 81 may be connected to the transceiver circuit 10 and the first antenna 101 separately. A first end of the first tuning circuit 81 may be connected to the transceiver circuit 10, a second end of the first tuning circuit 81 may be connected to the first antenna 101. The first tuning circuit 81 may be configured to adjust the impedance of the transceiver path.

The second tuning circuit 82 may be connected to the receiving circuit 20 and the second antenna 102. A first end of the second tuning circuit 82 may be connected to the receiving circuit 20, and a second end of the second tuning circuit 82 may be connected to the second antenna 102. The second tuning circuit 82 may be configured to adjust the impedance of the receiving path where the correspondingly connected receiving circuit 20 and receiving antenna are located. The number of second tuning circuits 82 may be the same as the number of receiving modules 21 included in the receiving circuit 20. In a case where the receiving circuit 20 includes a plurality of receiving modules 21, the second tuning circuits 82 may be connected to the receiving modules 21 and the second antennas 102 separately, and the receiving modules 21 and the second antennas 102 connected to different second tuning circuits 82 may be different.

The processing circuit 50 may be further connected to the first tuning circuit 81 and the second tuning circuit 82 separately. The processing circuit 50 may be further configured to: adjust tuning parameters of the first tuning circuit 81 according to the first impedance information, so as to adjust the impedance of the transceiver path; and, adjust the tuning parameters of the second tuning circuit 82 according to the second impedance information, so as to adjust the impedance of the matched receiving path. The processing circuit 50 may send a first tuning instruction according to the first impedance information to adjust the tuning parameters of the first tuning circuit 81 through the first tuning instruction, thereby adjusting the impedance of the transceiver path. The processing circuit 50 may send a second tuning instruction according to the second impedance information to adjust the tuning parameters of the second tuning circuit 82 through the second tuning instruction, thereby adjusting the impedance of the matched receiving path.

In the embodiments of the present disclosure, the radio frequency system further may include at least two tuning circuits 80. The at least two tuning circuits 80 may include the first tuning circuit 81 and at least one second tuning circuit 82. The first tuning circuit 81 may adjust the impedance of the transceiver path, and the second tuning circuit 82 may adjust the impedance of the receiving path where the correspondingly connected receiving circuit 20 and receiving antenna are located. This may realize the impedance tuning of the transceiver path and the receiving path, thereby enabling the impedance matching of each radio frequency path, solving the impedance mismatch problem, and further enhancing the communication performance of the communication device.

In some embodiments, as illustrated in Fig. 3, Fig. 4, Fig. 7, Fig. 9, and Fig. 11, the processing circuit 50 may include a radio frequency transceiver 51. The radio frequency transceiver 51 may be connected to the first coupling circuit 30, the second coupling circuit 40, the transceiver circuit 10, and the receiving circuit 20 separately. The radio frequency transceiver 51 may be configured to support transmission and reception of the radio frequency signals, determine the first impedance information according to the first forward coupled signal and the first backward coupled signal, and determine the second impedance information according to the second forward coupled signal and the second backward coupled signal. In this way, the impedance detection of the transceiver path and the receiving path may be realized, so that impedance tuning may be performed based on the detected impedance information to achieve impedance matching, thereby enhancing the communication quality of the communication device.

The radio frequency transceiver 51 may: correspondingly determine the first forward power and first phase information according to the first forward coupled signal; correspondingly determine the first reverse power and second phase information according to the first backward coupled signal; determine the first voltage standing wave ratio (VSWR) of the transceiver path according to the first forward power and the first reverse power; and,

determine the first impedance information of the transceiver path according to the first VSWR, the first phase information, and the second phase information. The radio frequency transceiver 51 may also correspondingly determine the second forward power and third phase information according to the second forward coupled signal; correspondingly determine the second reverse power and fourth phase information according to the second backward coupled signal; determine the second VSWR of the receiving path according to the second forward power and the second reverse power; and, determine the second impedance information of the receiving path according to the second VSWR, the third phase information, and the fourth phase information. For determining the VSWR according to the forward power and the reverse power, refer to the aforementioned equations (1) and (2), which will not be repeated herein.

For example, the radio frequency transceiver 51 may also perform signal amplification, down-conversion, and ADC processing on each coupled signal to correspondingly determine the power and phase information according to the processed coupled signals. The coupled signals may include the first forward coupled signal, the first backward coupled signal, the second forward coupled signal, and the second backward coupled signal.

In some embodiments, as illustrated in Fig. 3, Fig. 4, Fig. 7, Fig. 9, and Fig. 11, the processing circuit 50 further may include a modem 52. The modem 52 may be connected to the radio frequency transceiver 51, the first tuning circuit 81, and the second tuning circuit 82 separately. One of the radio frequency transceiver 51 and the modem 52 may be configured to: adjust the tuning parameters of the first tuning circuit 81 according to the first impedance information, so as to achieve impedance matching of the transceiver path; and, adjust the tuning parameters of the second tuning circuit 82 according to the second impedance information, so as to achieve impedance matching of the matched receiving path. In this way, impedance tuning may be performed based on the impedance information, realizing impedance matching of the transceiver path and the receiving path, thereby enhancing the communication quality of the communication device. The radio frequency transceiver 51 or the modem 52 may be selected for impedance tuning according to actual scenarios, which is not limited herein. This configuration may be applicable to various scenarios and have high flexibility.

For example, one of the radio frequency transceiver 51 and the modem 52 may be configured to: generate and send the first tuning instruction according to the first impedance information, so as to adjust the tuning parameters of the first tuning circuit 81, so that the first tuning circuit 81 may adjust the impedance of the transceiver path to achieve impedance matching of the transceiver path; and, generate and send the second tuning instruction according to the second impedance information, so as to adjust the tuning parameters of the second tuning circuit 82, so that the second tuning circuit 82 may adjust the impedance of the receiving path to achieve impedance matching of the receiving path.

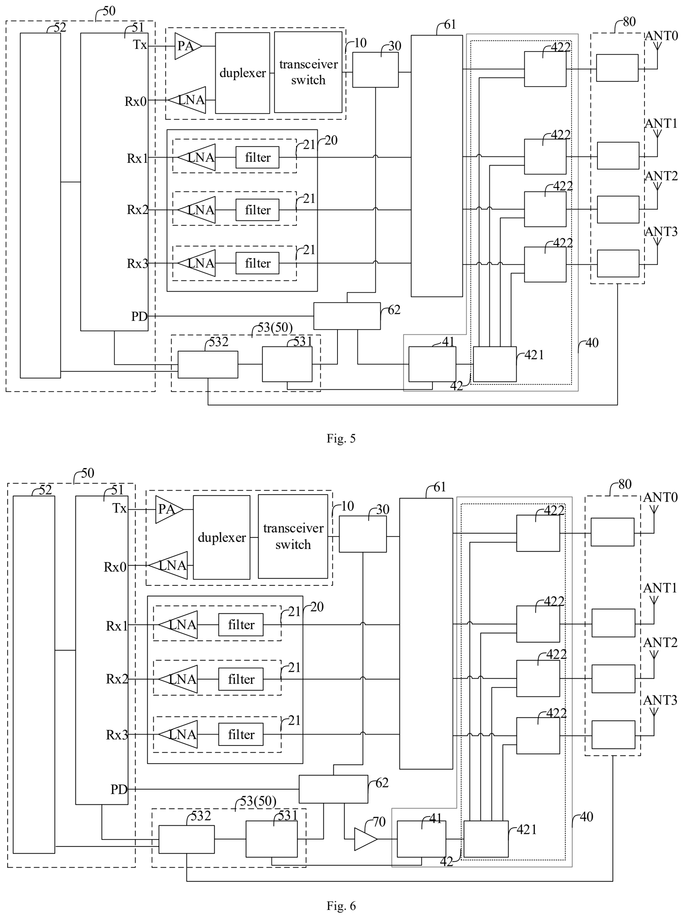

In some embodiments, as illustrated in Fig. 5, Fig. 6, Fig. 8, Fig. 10, and Fig. 12, the processing circuit 50 may include the radio frequency transceiver 51 and a processing module 53. The radio frequency transceiver 51 may be connected to the transceiver circuit 10 and the receiving circuit 20 separately. The radio frequency transceiver 51 may be configured to support transmission and reception of the radio frequency signals.

The processing module 53 may be connected to the first coupling circuit 30 and the second coupling circuit 40 separately. The processing module 53 may be configured to: determine the first impedance information according to the first forward coupled signal and the first backward coupled signal; adjust the tuning parameters of the first tuning circuit 81 according to the first impedance information to achieve impedance matching of the transceiver path; determine the second impedance information according to the second forward coupled signal and the second backward coupled signal; and, adjust the tuning parameters of the second tuning circuit 82 according to the second impedance information to achieve impedance matching of the matched receiving path.

For example, the processing module 53 may include a power detection unit 531 and a processing unit 532. The power detection unit 531 may be connected to the first coupling circuit 30 and the second coupling circuit 40 separately. The power detection unit 531 may be configured to: correspondingly determine the first forward power according to the first forward coupled signal; correspondingly determine the first reverse power according to the first backward coupled signal; correspondingly determine the second forward power according to the second forward coupled signal; and, correspondingly determine the second reverse power according to the second backward coupled signal.

The processing unit 532 may be connected to the power detection unit 531. The processing unit 532 may be configured to: correspondingly determine the first phase information according to the first forward coupled signal; correspondingly determine the second phase information according to the first backward coupled signal; determine the first VSWR of the transceiver path according to the first forward power and the first reverse power; and determine the first impedance information of the transceiver path according to the first VSWR, the first phase information, and the second phase information. The processing unit 532 may be further configured to: correspondingly determine the third phase information according to the second forward coupled signal; correspondingly determine the fourth phase information according to the second backward coupled signal; determine the second VSWR of the receiving path according to the second forward power and the second reverse power, and determine the second impedance information of the receiving path according to the second VSWR, the third phase information, and the fourth phase information. For example, the processing unit 532 may include a micro control unit (MCU).

The above radio frequency system may support transmission and reception of the radio frequency signals through the radio frequency transceiver 51, and may support impedance detection and impedance tuning of the transceiver path and the receiving path through either the radio frequency transceiver 51 or the processing module 53, thereby achieving impedance matching with high flexibility. In addition, in a case where the processing module 53 is used to perform impedance detection and tuning, there is no need to modify the radio frequency transceiver 51, technical support for realizing impedance matching of each path may thus be provided.

In some embodiments, as illustrated in Fig. 3 to Fig. 12, the radio frequency system further may include a second switch circuit 62. The second switch circuit 62 may be connected to the first coupling circuit 30, the second coupling circuit 40, and the processing circuit 50 separately. The second switch circuit 62 may be configured to selectively turn on the path between the first coupling circuit 30 and the second coupling circuit 40, and selectively turn on the path between the first coupling circuit 30 and the processing circuit 50.

The first forward coupled signal may be transmitted to the processing circuit 50 for impedance detection of the transceiver path, and may also be transmitted to the second coupling circuit 40 for impedance detection of the receiving path. Based on this, the second switch circuit 62 may be arranged on the path between the first coupling circuit 30 and the processing circuit 50, and arranged on the path between the first coupling circuit 30 and the second coupling circuit 40. The transmission of the first forward coupled signal may be controlled through the second switch circuit 62 to realize impedance detection of each path. In this way, the first forward coupled signal may be shared, realizing impedance tuning of the receiving path in the non-transmission state, and further realizing impedance detection and tuning of the transmit path and multiple receiving paths. In this way, the problem of impedance mismatch caused by the inability to perform impedance detection on the receiving path in the non-transmission state may be solved, thereby facilitating enhancement of the antenna performance.

For example, the processing circuit 50 may be further connected to the second switch circuit 62. The processing circuit 50 may be further configured to: control the turn-on state of the second switch circuit 62; determine the first impedance information of the transceiver path according to the first forward coupled signal and the first backward coupled signal in a case where the second switch circuit 62 turns on the path between the first coupling circuit 30 and the processing circuit 50; and determine the second impedance information of the receiving path according to the second forward coupled signal and the second backward coupled signal in a case where the second switch circuit 62 turns on the path between the first coupling circuit 30 and the second coupling circuit 40.

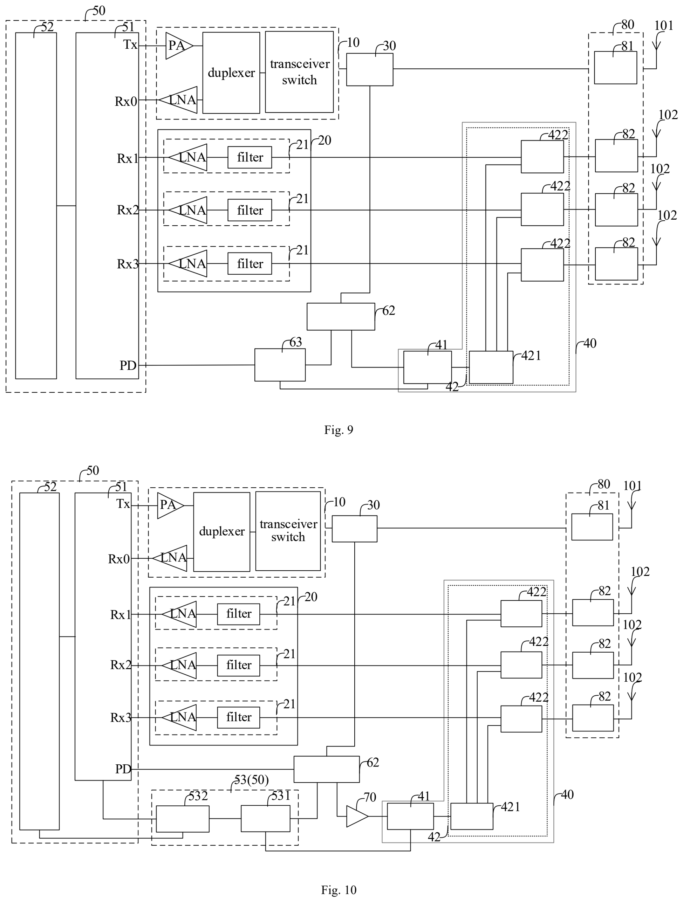

In some embodiments, as illustrated in Fig. 4 and Fig. 9, the radio frequency system further may include a third switch circuit 63. The third switch circuit 63 may be connected to the second switch circuit 62, the second coupling circuit 40, and the processing circuit 50 separately. The third switch circuit 63 may be configured to selectively turn on the path between the processing circuit 50 and the second switch circuit 62, and selectively turn on the path between the processing circuit 50 and the second coupling circuit 40.

The processing circuit 50 may be configured to support impedance detection of the transceiver path, and may be configured to support impedance detection of the receiving path. Based on this, the third switch circuit 63 may be arranged on the path between the processing circuit 50 and the second switch circuit 62, and the path between the processing circuit 50 and the second coupling circuit 40. The transmission of the coupled signals matching with the transceiver path and the transmission of the coupled signals matching with the receiving path may be controlled through the third switch circuit 63 separately, so that the processing circuit 50 may perform impedance detection of each path. In this way, the power detection (PD) port of the processing circuit 50 may be shared, and there is no need to arrange separate output ports and wiring for the second coupling circuit 40 and the processing circuit 50, which may help enhance system integration.

For example, the processing circuit 50 may be further connected to the third switch circuit 63. The processing circuit 50 may be further configured to control the turn-on state of the third switch circuit 63. In a case where the third switch circuit 63 turns on the path between the second switch circuit 62 and the processing circuit 50, the processing circuit 50 may determine the first impedance information of the transceiver path according to the first forward coupled signal and the first backward coupled signal. In a case where the second switch circuit 62 turns on the path between the second coupling circuit 40 and the second switch circuit 62, the processing circuit 50 may be configured to determine the second impedance information of the receiving path according to the second forward coupled signal and the second backward coupled signal.

In some embodiments, as illustrated in Fig. 3 to Fig. 12, the transceiver circuit 10 may include a power amplifier, a low-noise amplifier, a duplexer, and a transceiver switch. The power amplifier and the low-noise amplifier of the transceiver circuit 10 may be connected to the radio frequency transceiver 51 respectively. The duplexer may be connected to the power amplifier, the low-noise amplifier, and the transceiver switch separately. The transceiver switch may be connected to the first coupling circuit 30. The power amplifier may be configured to support power amplification of the radio frequency signals. The low-noise amplifier may be configured to support low-noise amplification of the radio frequency signals. The duplexer may be configured to support isolation of the radio frequency signals. The transceiver switch may be configured to selectively turn on the path between the duplexer and the first coupling circuit 30. In this way, the transceiver circuit 10 may realize transmission and reception of the radio frequency signals to support the communication function of the communication device.

In some embodiments, as illustrated in Fig. 3 to Fig. 12, the receiving module 21 may include the low-noise amplifier and a filter. The low-noise amplifier of the receiving module 21 may be connected to the radio frequency transceiver 51, and may be configured to support low-noise amplification of the radio frequency signals. The filter may be arranged on the receiving path between the low-noise amplifier and the second antenna 102, and may be configured to support filtering of the reflected signal of the first forward coupled signal. In this way, the receiving module 21 may realize reception of the radio frequency signals to support the communication function of the communication device.

In some embodiments, as illustrated in Fig. 3, the radio frequency system is provided. The following description takes the radio frequency system connected to four antennas as an example. The four antennas are antenna ANT0, antenna ANT1, antenna ANT2, and antenna ANT3.

The radio frequency system may include the transceiver circuit 10, the receiving circuit 20, the first coupling circuit 30, the second coupling circuit 40, the processing circuit 50, the first switch circuit 61, the second switch circuit 62, the third switch circuit 63, the low-noise amplification circuit 70, and four tuning circuits 80. The transceiver circuit 10 may include the power amplifier, the low-noise amplifier, the duplexer, and the transceiver switch. The receiving circuit 20 may include three receiving modules 21. Each of the three receiving modules 21 may include the low-noise amplifier and the filter. The second coupling circuit 40 may include the first coupling module 41 and the first switch module 42. The first switch module 42 may include the first switch unit 421 and four second switch units 422. The processing circuit 50 may include the radio frequency transceiver 51 and the modem 52.

The power amplifier and the low-noise amplifier of the transceiver circuit 10, the three low-noise amplifiers of the receiving circuit 20, and the third switch circuit 63 may be respectively connected to the radio frequency transceiver 51. The duplexer may be connected to the power amplifier, the low-noise amplifier, and the transceiver switch of the transceiver circuit 10 separately. The transceiver switch may be connected to the first coupling circuit 30. The three filters may be respectively connected to the matched low-noise amplifiers. The first switch circuit 61 may be connected to the first coupling circuit 30, the three filters, and the four second switch units 422 separately. The second switch circuit 62 may be connected to the first coupling circuit 30, the third switch circuit 63, and the first coupling module 41 separately. The first switch unit 421 may be connected to the first coupling module 41 and the four second switch units 422 separately. Each of the four tuning circuits 80 may be connected to a matched second switch unit 422 and a matched antenna. The radio frequency transceiver 51 may be connected to the transceiver switch, the first switch circuit 61, the second switch circuit 62, the third switch circuit 63, the first switch unit 421, and each second switch unit 422 separately. Either the modem 52 or the radio frequency transceiver 51 may be connected to the four tuning circuits 80 separately.

The first coupling circuit 30 may be a bidirectional coupler #1. The first coupling module 41 may be a bidirectional coupler #2. The first switch circuit 61 may be a 4P4T switch. Each of the second switch circuit 62, the third switch circuit 63, and the second switch units 422 may be an SP2T switch. The first switch unit 421 may be an SP4T switch. The tuning circuit 80 may include the impedance tuner.

Taking a case where the antenna ANT0 as the transceiver antenna and the antennas ANT1, ANT2 and ANT3 as receiving antennas as an example, in application, the radio frequency transceiver 51 may control the turn-on states of the transceiver switch, the first switch circuit 61, the second switch circuit 62, the third switch circuit 63, the first switch unit 421, and each second switch unit 422 separately.

For the antenna ANT0, during the transmit time slot in a case where power is transmitted externally through the bidirectional coupler #1, the amplitude and phase information of each of the first forward coupled signal power and the first backward coupled signal power may be sampled. The sampled amplitude and phase information may then be fed back to the interior of the radio frequency transceiver 51 for signal amplification, down-conversion, and ADC calculation processing. Thus, the power reflection coefficient S11 and the phase information at the position of the bidirectional coupler #1 may be obtained. In other words, the impedance information at that position may be indirectly obtained through the power reflection coefficient S11 and the phase information. Subsequently, the modem 52 or the radio frequency transceiver 51 may send the tuning instruction to control the impedance tuner on the transceiver path where the antenna ANT0 is located. By adjusting the tuning parameters of the impedance tuner (i.e., changing internal matching network of the impedance tuner), the impedance matching with the antenna ANT0 may be adjusted, thereby optimizing the impedance matching of the antenna ANT0 and ultimately enabling the antenna ANT0 to operate in a state of good impedance matching.

For the antenna ANT1, the first forward coupled signal coupled by the bidirectional coupler #1 may be transmitted to the antenna ANT1 through the second switch circuit 62, the bidirectional coupler #2, the first switch unit 421, and the second switch unit 422 matching with the antenna ANT1. The amplitude and phase information of the second forward coupled signal power and the second backward coupled signal power may then be sampled through the bidirectional coupler #2, and fed back to the interior of the radio frequency transceiver 51 through the third switch circuit 63 for signal amplification, down-conversion, and ADC calculation processing. Thus, the power reflection coefficient S11 and phase information at the position of the bidirectional coupler #2 may be obtained. In other words, the second impedance information at that position may be indirectly obtained through the power reflection coefficient S11 and the phase information. Subsequently, the modem 52 or the radio frequency transceiver 51 may send the tuning instruction to control the impedance tuner on the receiving path where the antenna ANT1 is located. By adjusting the tuning parameters of the impedance tuner (i.e., changing the internal matching network of the impedance tuner). The impedance matching with antenna ANT1 may be adjusted, thereby optimizing the impedance matching of the antenna ANT1 and ultimately enabling the antenna ANT1 to operate in a state of good impedance matching.

For the antennas ANT2 and ANT3, the same processing method as that for the antenna ANT1 may be adopted. Finally, the impedance detection of the four antennas may be realized, thereby supporting the impedance tuning of the transceiver antenna and each receiving antenna. In addition, to avoid path conflicts, power detection may be performed during the transmit time slot and in the idle time after the power detection of the transmit path itself is completed, and the impedance detection of each receiving path may be performed in the time-division manner. The radio frequency system provided in the present embodiment may support impedance detection and tuning of each antenna, and also support the antenna switching.

In some embodiments, as illustrated in Fig. 4, the radio frequency system may be provided. On the basis of the radio frequency system illustrated in Fig. 3, this radio frequency system may be provided with the low-noise amplification circuit 70 between the second switch circuit 62 and the first coupling module 41. The first forward coupled signal may be subjected to the low-noise amplification process before coupling, which may ensure that the detected power is within a suitable power range and make the detection result more accurate.

In some embodiments, as illustrated in Fig. 5, a radio frequency system may be provided. Compared with the radio frequency system illustrated in Fig. 3, the processing circuit 50 of this radio frequency system further may include the power detection unit 531 and the processing unit 532. The second switch circuit 62 may be separately connected to each of the first coupling circuit 30, the first coupling module 41, the radio frequency transceiver 51, and the power detection unit 531. The processing unit 532 may be separately connected to each of the power detection unit 531, the radio frequency transceiver 51, and the modem 52. The processing unit 532 may be an MCU. In application, the radio frequency transceiver may be configured to support transmission and reception of the radio frequency signals. The power detection unit 531 and the processing unit 532 may be configured to perform the impedance detection of each radio frequency path. The MCU may be configured to send the tuning instructions to control the impedance tuner for impedance tuning, thereby decoupling platform binding.

In some embodiments, as illustrated in Fig. 6, the radio frequency system may be provided. Compared with the radio frequency system illustrated in Fig. 5, this radio frequency system may be provided with the low-noise amplification circuit 70 between the second switch circuit 62 and the first coupling module 41. The first forward coupled signal may be subjected to the low-noise amplification process before coupling, which may ensure that the detected power is within a suitable power range and make the detection result more accurate.

In some embodiments, as illustrated in Fig. 7, the radio frequency system may be provided. Compared with the radio frequency system illustrated in Fig. 3, the second coupling circuit 40 of this radio frequency system may include the power division module 43 and four second coupling modules 44. Each second coupling module 44 may include the coupling unit 441 and the third switch unit 442. The power division module 43 may be separately connected to each of the second switch circuit 62 and the four coupling units 441. Each of the four third switch units 442 may be separately connected to the first switch circuit 61, the tuning circuit 80, and the coupling unit 441. The power division module 43 may be a power divider. The coupling unit 441 may be the bidirectional coupler #2.

The impedance tuning process of the antenna ANTO may be the same as that of the radio frequency system illustrated in Fig. 4, and specific details may be found in the relevant descriptions above. For the antennas ANT1, ANT2 and ANT3, the first forward coupled signal coupled by the bidirectional coupler #1 may be transmitted to the power divider after low-noise amplification. The power divider may divide the low-noise amplified first forward coupled signal into three first sub-forward coupled signals. The three first sub-forward coupled signals may then be transmitted to the antennas ANT1, ANT2 and ANT3 in one-to-one correspondence through the matched bidirectional coupler #2 and the third switch unit 442. The amplitude and phase information of the second forward coupled signal power and the second backward coupled signal power may then be sampled through the matched bidirectional coupler #2, and fed back to the interior of the radio frequency transceiver 51 for signal amplification, down-conversion, and ADC calculation processing. Thus, the power reflection coefficient S11 and phase information of each receiving antenna at the position of the bidirectional coupler #2 may be obtained. In other words, the impedance information of the receiving antenna at the position of the bidirectional coupler #2 may be indirectly obtained through the power reflection coefficient S11 and phase information. Subsequently, the modem 52 or the radio frequency transceiver 51 may send the tuning instruction to control the impedance tuner on the receiving path where the antennas ANT1, ANT2, and ANT3 are located. By adjusting the tuning parameters of the impedance tuner (i.e., changing the internal matching network of the impedance tuner), the impedance matching with the antennas ANT1, ANT2, and ANT3 may be adjusted, thereby optimizing the impedance matching of the antennas ANT1~3 and ultimately enabling the antennas ANT1, ANT2, and ANT3 to operate in a state of good impedance matching.

To avoid path conflicts, the power detection may be performed during the transmit time slot and in the idle time after the power detection of the transmit path itself is completed, and the impedance detection of each receiving path may be performed in a time-division manner or in a simultaneous manner. The radio frequency system provided in the present embodiment may support impedance detection and tuning of each antenna, and may also support the antenna switching.

In some embodiments, as illustrated in Fig. 8, the radio frequency system may be provided. Compared with the radio frequency system illustrated in Fig. 7, the processing circuit 50 of this radio frequency system further may include the power detection unit 531 and the processing unit 532. The power detection unit 531 and the processing unit 532 may be configured to perform impedance detection of each radio frequency path. The MCU may be configured to send the tuning instructions to control the impedance tuner for impedance tuning, thereby decoupling platform binding. The radio frequency system further may include the low-noise amplification circuit 70. The low-noise amplification circuit 70 may be separately connected to each of the second switch circuit 62 and the power division module 43. The low-noise amplification circuit 70 may be configured to perform low-noise amplification on the first coupled signal.

In some embodiments, as illustrated in Fig. 9, the radio frequency system may be provided. Compared with the radio frequency system illustrated in Fig. 3, the receiving module 21 of this radio frequency system may be directly connected to the second coupling circuit 40. The filter of the receiving module 21 may be correspondingly connected to the second switch unit 422 in the second coupling circuit 40. The first coupling circuit 30 may be directly connected to the first tuning circuit 81. The impedance tuning process of each radio frequency path may be the same as that of the radio frequency systems illustrated in Fig. 3 and Fig. 4 above, and specific details may be referred in the relevant descriptions above. The radio frequency system provided in the present embodiment may support impedance detection and tuning of each antenna, and also support transmission and multi-channel reception of the radio frequency signals.

In some embodiments, as illustrated in Fig. 10, the radio frequency system may be provided. Compared with the radio frequency system illustrated in Fig. 9, the processing circuit 50 of this radio frequency system further may include the power detection unit 531 and the processing unit 532. The power detection unit 531 and the processing unit 532 may be configured to perform impedance detection of each radio frequency path. The MCU may be configured to send tuning instructions to control the impedance tuner for impedance tuning, thereby decoupling platform binding. The radio frequency system further may include the low-noise amplification circuit 70. The low-noise amplification circuit 70 may be separately connected to each of the second switch circuit 62 and the power division module 43. The low-noise amplification circuit 70 may be configured to perform low-noise amplification on the first coupled signal.

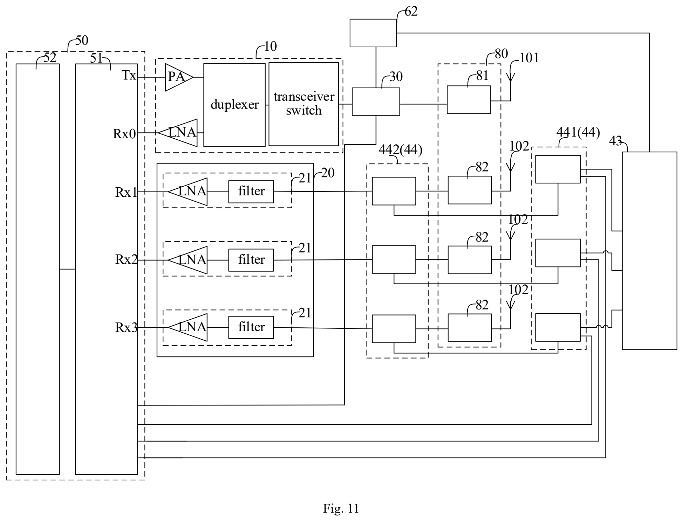

In some embodiments, as illustrated in Fig. 11, the radio frequency system may be provided. Compared with the radio frequency system illustrated in Fig. 7, the receiving module 21 of this radio frequency system may be directly connected to the second coupling circuit 40. The filter of the receiving module 21 may be correspondingly connected to the third switch unit 442 in the second coupling circuit 40. The first coupling circuit 30 may be directly connected to the first tuning circuit 81. The impedance tuning process of each radio frequency path may be the same as that of the radio frequency systems illustrated in Fig. 7 and Fig. 8 above, and specific details may be referred in the relevant descriptions above. The radio frequency system provided in the present embodiment may support impedance detection and tuning of each antenna, and may also support transmission and multi-channel reception of the radio frequency signals.

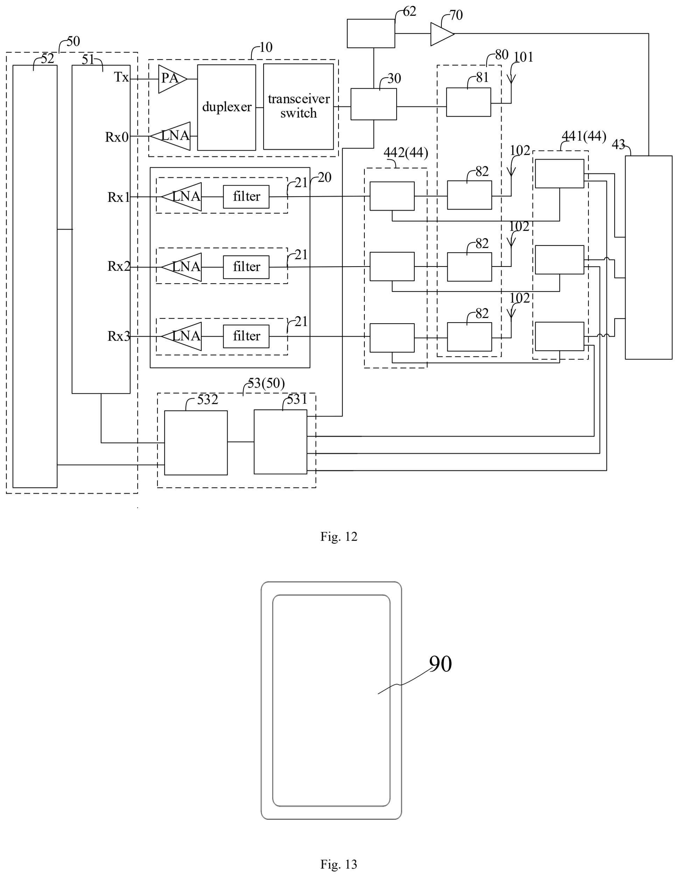

In some embodiments, as illustrated in Fig. 12, the radio frequency system may be provided. Compared with the radio frequency system illustrated in Fig. 11, the processing circuit 50 of this radio frequency system further may include the power detection unit 531 and the processing unit 532. The power detection unit 531 and the processing unit 532 may be configured to perform impedance detection of each radio frequency path. The MCU may be configured to send tuning instructions to control the impedance tuner for impedance tuning, thereby decoupling platform binding. The radio frequency system further may include the low-noise amplification circuit 70. The low-noise amplification circuit 70 may be separately connected to each of the second switch circuit 62 and the power division module 43. The low-noise amplification circuit 70 may be configured to perform low-noise amplification on the first coupled signal.

The modules and units in each circuit in the above-mentioned embodiments may exist in a discrete or integrated manner in actual use, which is not limited herein.

The radio frequency system provided in the embodiments of the present disclosure may not only support conventional transmit path impedance tuning but also enable impedance tuning for antenna paths that are only used for reception and not in a transmit state. This will greatly enhance the over-the-air (OTA) performance after the receiving antenna is mismatched due to being held by hand or the like, and enhance the user's communication experience. Specifically, the coupled feedback path matching with the transmit antenna may be used to transmit its coupled signal to the antenna of the non-transmit path for the front-end mismatch measurement, decoupling the problem that impedance tuning must be bound to the transmit path, realizing impedance tuning of the receiving antenna path, and solving the problem of antenna performance degradation caused by impedance mismatch in a case where the receiving antenna is held by hand, or the like.

Based on the same inventive concept, the embodiments of the present disclosure may also provide the communication device. The implementation solution for solving the problem provided by the communication device is similar to the implementation solution described in the above radio frequency system. Therefore, the specific limitations in the one or more communication device embodiments provided below may refer to the limitations on the radio frequency system above, which will not be repeated herein.

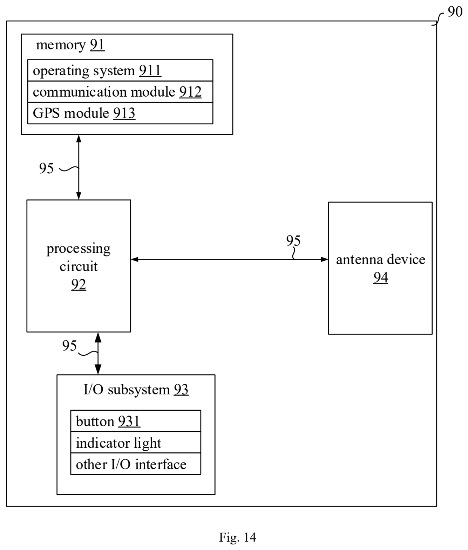

As illustrated in Fig. 13 and 14, further description may be given by taking the communication device as a cell phone as an example. Specifically, as illustrated in Fig. 14, a cell phone 90 may include a memory 91, a processing circuit 92, an input/output (I/O) subsystem 93, and at least one antenna device 94 as in any of the foregoing embodiments. The memory 90 optionally may include one or more computer-readable storage media. These components optionally may communicate through one or more communication buses or signal lines 95. Those skilled in the art may understand that the cell phone 90 illustrated in Fig. 14 does not constitute a limitation on the cell phone, and may include more or fewer components than illustrated, or combine certain components, or have different component arrangements. The various components illustrated in Fig. 14 may be implemented in hardware, software, or a combination of hardware and software, including one or more signal processing and/or application-specific integrated circuits.

The memory 91 optionally may include high-speed random-access memory. The memory 91 may also optionally include non-volatile memory, such as one or more magnetic disk storage devices, flash memory devices, or other non-volatile solid-state memory devices. For example, the software components stored in the memory 91 may include an operating system 911, a communication module (or instruction set) 912, a global positioning system (GPS) module (or instruction set) 913, or the like.

The processing circuit 92 may be configured to control the operation of the cell phone 90. The processing circuit 92 may be based on one or more microprocessors, microcontrollers, digital signal processors, baseband processors, power management units, audio codec chips, application-specific integrated circuits, or the like.

The I/O subsystem 93 may couple input/output peripherals on the cell phone 90, such as a keypad and other input control devices, to a peripheral interface. The I/O subsystem 93 optionally may include a touch screen, buttons, tone generators, accelerometers (motion sensors), ambient light sensors and other sensors, light-emitting diodes and other status indicators, data ports, or the like. For example, a user may control the operation of the cell phone 90 by providing commands via the I/O subsystem 93, and may use the output resources of the I/O subsystem 93 to receive status information and other outputs from the cell phone 90. For example, the user may turn on or turn off the cell phone by pressing the button 931.

In the description of the present specification, references to terms such as "some embodiments" and "other embodiments" mean that specific features, structures, materials, or characteristics described in connection with the embodiment or example may be included in at least one embodiment or example of the present disclosure. In the present specification, the schematic descriptions of the above-mentioned terms do not necessarily refer to the same embodiment or example.

**Claims**

1. A radio frequency system, **characterized by** comprising:

a transceiver circuit (10), configured to be connected to a first antenna (101) and support transmission and reception of a radio frequency signal;
a receiving circuit (20), configured to be connected to a second antenna (102) and support reception of a radio frequency signal;
a first coupling circuit (30), arranged on a transceiver path between the transceiver circuit (10) and the first antenna (101); configured to support coupling of a transmit signal of the transceiver path and to output a first forward coupled signal; and configured to support coupling of a reflected signal of the transmit signal, and to output a first backward coupled signal;
a second coupling circuit (40), arranged on a receiving path between the receiving circuit (20) and the second antenna (102), and arranged on a coupling path between the first coupling circuit (30) and the second antenna (102); configured to selectively turn on the receiving path and the coupling path; configured to support coupling of the first forward coupled signal, and output a second forward coupled signal; and configured to support coupling of a reflected signal of the first forward coupled signal, and output a second backward coupled signal; and
a processing circuit (50), connected to the first coupling circuit (30); configured to determine, based on the first forward coupled signal and the first backward coupled signal, first impedance information of the transceiver path; and connected to the second coupling circuit (40), configured to determining, based on the second forward coupled signal and the second backward coupled signal, second impedance information of the receiving path.

2. The radio frequency system as claimed in claim 1, wherein

the radio frequency system further comprises a first switch circuit (61); the first switch circuit (61) is configured to be connected to each of the first coupling circuit (30), the receiving circuit (20), and the second coupling circuit (40); configured to selectively turn on a path between the first coupling circuit (30) and the second coupling circuit (40) and a path between the receiving circuit (20) and the second coupling circuit (40); the second coupling circuit (40) is arranged on paths between the first switch circuit (61) and the various antennas, and is arranged on paths between the first coupling circuit (30) and the various antennas; the second coupling circuit (40) is configured to selectively turn on a path between the first switch circuit (61) and each of the various antennas, and selectively turn on a path between the first coupling circuit (30) and each of the various antennas; the second coupling circuit (40) is configured to support coupling of the first forward coupled signal and to output the second forward coupled signal; and, the second coupling circuit (40) is configured to support coupling of the reflected signal of the first forward coupled signal, and to output the second backward coupled signal.

3. The radio frequency system as claimed in claim 2, wherein
the second coupling circuit (40) comprises:

a first coupling module (41), connected to the first coupling circuit (30); configured to support coupling of the first forward coupled signal and output the second forward coupled signal; and, configured to support coupling of the reflected signal of the first forward coupled signal, and output the second backward coupled signal; and a first switch module (42), arranged on a path between the first switch circuit (61) and a matched one of the various antennas, and arranged on a path between the first coupling module (41) and the matched one of the various antennas; configured to selectively turn on the path between the first switch circuit (61) and the matched one of the various antennas, and selectively turn on the path between the first coupling module (41) and the matched one of the various antennas.

4. The radio frequency system as claimed in claim 3, wherein

the processing circuit (50) is further connected to the first switch module (42);
the processing circuit (50) is further configured to control a turn-on state of the first switch module (42), turn on the coupling path during a transmission time slot.

5. The radio frequency system as claimed in claim 3, wherein

the receiving circuit (20) comprises at least two receiving modules (21); each of the at least two receiving modules (21) is configured to be connected to the second antenna (102) and support reception of the radio frequency signal; different receiving modules (21) are connected to different second antennas (102);
the processing circuit (50) is further configured to control a turn-on state of the first switch module (42), to turn on the coupling path matching with each of the various second antennas (102) in a time-division manner during at least one transmission time slot;
the first coupling module (41) is further configured to, in a case where a target coupling path among various coupling paths is in a turn-on state during the transmission time slot, support coupling of the first forward coupled signal and output the second forward coupled signal, and support coupling of the reflected signal of the first forward coupled signal and output the second backward coupled signal; the second impedance information is impedance information of a target receiving path.

6. The radio frequency system as claimed in claim 3, wherein

the receiving circuit (20) comprises at least two receiving modules (21); each of the at least two receiving modules (21) is configured to connect to the second antenna (102) and support reception of the radio frequency signal; different receiving modules (21) are connected to different second antennas (102);
the first switch module (42) comprises a first switch unit (421) and at least two second switch units (422);

the first switch unit (421) is connected to the first coupling module (41) and each of the at least two second switch units (422); the first switch unit (421) is configured to selectively turn on a path between the first coupling module (41) and each of the at least two second switch units (422); each of the at least two second switch units (422) is arranged on a path between the first switch circuit (61) and a matched one of the various antennas, and is arranged on a path between the first switch unit (421) and the matched one of the various antennas; each of the at least two second switch units (422) is configured to selectively turn on the path between the first switch circuit (61) and the matched one of various antennas, and selectively turn on the path between the first switch unit (421) and the matched one of the various antennas; different second switch units (422) match with different antennas.

7. The radio frequency system as claimed in claim 2, wherein
the receiving circuit (20) comprises at least two receiving modules (21); each of the at least two receiving modules (21) is configured to connect to a matched second antenna (102) and support reception of the radio frequency signal; different receiving modules (21) are connected to different second antennas (102); the second coupling circuit (40) comprises:

a power division module (43), connected to the first coupling circuit (30), configured to generate at least two first sub-forward coupled signals according to the first forward coupled signal; and
at least three second coupling modules (44), wherein each of the at least three second coupling modules (44) is arranged on a path between the first switch circuit (61) and a matched one of the various antennas, and arranged on a path between the power division module (43) and the matched one of the various antennas; different second coupling modules (44) match with different antennas; each of the at least three second coupling modules (44) is configured to selectively turn on the path between the first switch circuit (61) and the matched one of the various antennas, and selectively turn on the path between the power division module (43) and the matched one of the various antennas, configured to support coupling of the first sub-forward coupled signal and output the second forward coupled signal, and configured to support coupling of the reflected signal of the first forward coupled signal and output the second backward coupled signal.

8. The radio frequency system as claimed in claim 7, wherein
the second coupling module (44) comprises:

a coupling unit (441), connected to the power division module (43), configured to support coupling of the first sub-forward coupled signal and output the second forward coupled signal, and support coupling of the reflected signal of the first forward coupled signal and output the second backward coupled signal;
a third switch unit (442), arranged on a path between the coupling unit (441) and a matched one of the various antennas, and arranged on a path between the first switch circuit (61) and the matched one of the various antennas, configured to selectively turn on the path between the first switch circuit (61) and the matched one of the various antennas, and selectively turn on the path between the power division module (43) and the matched one of the various antennas.

9. The radio frequency system as claimed in claim 8, wherein

the processing circuit (50) is further connected to each of the third switch units (442); the processing circuit (50) is further configured to control a turn-on state of each of the third switch units (442) to turn on a coupling path matching with at least one second antenna (102) during a transmission time slot; and
the processing circuit (50) is further configured to determine impedance information of a receiving path where the coupling unit (441) is located according to the second forward coupled signal and the second backward coupled signal output by at least one coupling unit (441).

10. The radio frequency system as claimed in any one of claims 1-9, wherein

the radio frequency system further comprises:

a first tuning circuit (81), arranged on the transceiver path between the transceiver circuit (10) and the first antenna (101), and configured to adjust impedance of the transceiver path; and
a second tuning circuit (82), arranged on the receiving path between the receiving circuit (20) and the second antenna (102), and configured to adjust impedance of the receiving path;

wherein the processing circuit (50) is further connected to each of the first tuning circuit (81) and the second tuning circuit (82); the processing circuit (50) is further configured to adjust a tuning parameter of the first tuning circuit (81) according to the first impedance information to adjust the impedance of the transceiver path, and configured to adjust a tuning parameter of the second tuning circuit (82) according to the second impedance information to adjust the impedance of the receiving path.

11. The radio frequency system as claimed in claim 10, wherein

the processing circuit (50) comprises:

a radio frequency transceiver (51), connected to each of the first coupling circuit (30), the second coupling circuit (40), the transceiver circuit (10), and the receiving circuit (20); configured to support transmission and reception of the radio frequency signal, determine the first impedance information according to the first forward coupled signal and the first backward coupled signal, and determine the second impedance information according to the second forward coupled signal and the second backward coupled signal; and

a modem (52), connected to each of the radio frequency transceiver (51), the first tuning circuit (81), and the second tuning circuit (82);

wherein either the radio frequency transceiver (51) or the modem (52) is configured to adjust the tuning parameter of the first tuning circuit (81) according to the first impedance information to achieve impedance matching of the transceiver path, and adjust the tuning parameter of the second tuning circuit (82) according to the second impedance information to achieve impedance matching of the matched receiving path.

12. The radio frequency system as claimed in claim 10, wherein
the processing circuit (50) comprises:

a radio frequency transceiver (51), connected to each of the transceiver circuit (10) and the receiving circuit (20), configured to support transmission and reception of the radio frequency signal; and

a processing module (53), connected to each of the first coupling circuit (30) and the second coupling circuit (40); configured to determine the first impedance information according to the first forward coupled signal and the first backward coupled signal, adjust the tuning parameter of the first tuning circuit (81) according to the first impedance information to achieve the impedance matching of the transceiver path; configured to determine the second impedance information according to the second forward coupled signal and the second backward coupled signal, and adjust the tuning parameter of the second tuning circuit (82) according to the second impedance information to achieve the impedance matching of the matched receiving path.

13. The radio frequency system as claimed in any one of claims 1-9, wherein
the radio frequency system further comprises:
a second switch circuit (62), connected to each of the first coupling circuit (30), the second coupling circuit (40), and the processing circuit (50); configured to selectively turn on a path between the second coupling circuit (40) and the first coupling circuit (30), and selectively turn on a path between the processing circuit (50) and the first coupling circuit (30).

14. The radio frequency system as claimed in claim 13, wherein
the radio frequency system further comprises:
a third switch circuit (63), connected to each of the first coupling circuit (30), the second coupling circuit (40), and the processing circuit (50); configured to selectively turn on the path between the processing circuit (50) and the first coupling circuit (30), and a path between the second coupling circuit (40) and the processing circuit (50).

15. A communication device, comprising the radio frequency system as claimed in any one of claims 1-14.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

memory 91

operating system 911

communication module 912

GPS module 913

95

processing circuit 92

95

antenna device 94

95

I/O subsystem 93

button 931

indicator light

other I/O interface

90

Fig. 14

Europäisches
Patentamt

European
Patent Office

Office européen
des brevets

## EUROPEAN SEARCH REPORT

**Application Number**

EP 25 22 7716

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/372656 A1 (MOW MATTHEW A [US] ET AL) 24 December 2015 (2015-12-24) * paragraphs [0045] - [0057]; figures 4-5 * | 1-15 | INV. H04B1/04 H04B1/18 |

-----

**TECHNICAL FIELDS SEARCHED (IPC)**

H04B

The present search report has been drawn up for all claims

| Place of search | Date of completion of the search | Examiner |
|---|---|---|
| Munich | 25 March 2026 | Ciccarese, Corrado |

EPO FORM 1503 03.82 (P4C01)

## ANNEX TO THE EUROPEAN SEARCH REPORT
## ON EUROPEAN PATENT APPLICATION NO.

EP 25 22 7716

25-03-2026

| Patent document cited in search report | Publication date | Patent family member(s) | Publication date |
|---|---|---|---|
| US 2015372656 A1 | 24-12-2015 | CN 106575970 A | 19-04-2017 |
| | | DE 112015002917 T5 | 06-04-2017 |
| | | KR 20160147975 A | 23-12-2016 |
| | | US 2015372656 A1 | 24-12-2015 |
| | | WO 2015195269 A1 | 23-12-2015 |

EPO FORM P0459

For more details about this annex : see Official Journal of the European Patent Office, No. 12/82